Europäisches Patentamt

European Patent Office

Office européen des brevets

(11) Veröffentlichungsnummer: **0 379 062 B1**

# EUROPÄISCHE PATENTSCHRIFT

(45) Veröffentlichungstag der Patentschrift: **01.06.94**

(51) Int. Cl.$^5$: **G11B 5/706**, H01F 1/06

(21) Anmeldenummer: **90100502.5**

(22) Anmeldetag: **11.01.90**

(54) **Nadelförmige Eisen-Magnetpigmente mit einstellbarer Koerzitivfeldstärke und Verfahren zu deren Herstellung; Fe-Metallpigmente zur magnetischen Signalaufzeichnung mit einstellbarer Koerzitivfeldstärke.**

(30) Priorität: **14.01.89 DE 3901027**

(43) Veröffentlichungstag der Anmeldung:
**25.07.90 Patentblatt 90/30**

(45) Bekanntmachung des Hinweises auf die
Patenterteilung:
**01.06.94 Patentblatt 94/22**

(84) Benannte Vertragsstaaten:
**AT BE CH DE DK ES FR GB IT LI LU NL SE**

(56) Entgegenhaltungen:
**EP-A- 0 014 889**
**DE-A- 2 130 921**
**DE-A- 3 044 769**

**JOURNAL OF MATERIALS SCIENCE, Band 23, Nr. 4, April 1988, Seiten 1260-1264; F.WATARI et al.: "Effect of crystalline properties on coercive force in ironacicular fine particles"**

(73) Patentinhaber: **Studiengesellschaft Kohle mbH**
**Kaiser-Wilhelm-Platz 1**
**D-45470 Mülheim(DE)**

(72) Erfinder: **Bönnemann, Helmut, Dr.**
**Kaiser-Wilhelm-Platz 1**
**D-4330 Mülheim/Ruhr(DE)**
Erfinder: **Brijoux, Werner, Dr.**
**Kaiser-Wilhelm-Platz 1**
**D-4330 Mülheim/Ruhr(DE)**
Erfinder: **Brinkmann, Rainer**
**Kaiser-Wilhelm-Platz 1**
**D-4330 Mülheim/Ruhr(DE)**

(74) Vertreter: **von Kreisler, Alek, Dipl.-Chem. et al**
**Patentanwälte**
**von Kreisler-Selting-Werner**
**Postfach 10 22 41**
**D-50462 Köln (DE)**

EP 0 379 062 B1

**Beschreibung**

Die vorliegende Erfindung betrifft neue ferromagnetische Metallpigmente von hoher Speicherdichte, überlegener Sättigungsmagnetisierung $M_S$ und hoher Remanenz $M_R$ für magnetische Aufzeichnungszwecke, die im wesentlichen aus Eisen bestehen und sich als gut ausgebildete nadelförmige Teilchen dadurch in Form überlegener Eigenschaften als Aufzeichnungsträger auszeichnen, daß die Koerzitivfeldstärke $H_C$ durch thermische Nachbehandlung in bisher nicht beschriebener Weise einstellbar ist, sowie ein Verfahren zur Herstellung derartiger Materialien.

Für die Herstellung magnetischer Metallpigmente werden in der Literatur mehrere Verfahren beschrieben. Neben der elektrolytischen Abscheidung von Metallpulvern aus Salzlösungen (US-PS 2,974,104 und US-PS 2,988,466), der thermischen Zersetzung entsprechender Metallcarbonyle (US-PS 2,597,701 und GB-PS 695 925) werden weiterhin geeignete Metallpulver aus wäßrigen Lösungen der Metallionen durch Reduktion mit Hilfe ebenfalls gelöster Reduktionsmittel hergestellt. Um anisometrische Teilchen zu erzeugen, arbeitet man ggf. im Magnetfeld (US-PS 3,206,338 und US-PS 3,607,218). Hierbei fällt jedoch das Metallpulver mit anorganischen Nebenprodukten verunreinigt an, welche in einem besonderen, technisch aufwendigen Mehrstufenprozeß mit Wasser und wasser-mischbaren Solventien abgetrennt werden müssen.

Die Herstellung von Eisenpulvern aus den entsprechenden Oxiden, Oxidhydroxiden etc. durch Reduktion mit gasförmigen Reduktionsmitteln (üblicherweise Wasserstoff) bei Temperaturen über 250 °C ist ebenfalls beschrieben (US-PS 2,879,154 und US-PS 2,900,246). Diese Verfahrensweise ist optimiert worden, indem als Vorstufe ein Eisen-(III)-hydroxid in ein ferrimagnetisches Eisenoxid ($Fe_2O_3$) übergeführt, bei Temperaturen zwischen 300 und 600 °C, insbesondere 400 - 500 °C. mit einem gasförmigen Reduktionsmittel zu $Fe_3O_4$ reduziert und dieses bei 600 - 800 °C getempert worden ist (EP-PS 0 015 485).

Die entscheidenden Kenngrößen magnetischer Materialien für Aufzeichnungszwecke sind Sättigungsmagnetisierung $M_S$, Remanenz $M_R$ und Koerzitivfeldstärke $H_C$. Die Entwicklung neuer Magnetpigmente hat zum Ziel, die Speicherdichten durch Erhöhung von Remanenz und Koerzitivkraft zu verbessern. Die genannten magnetischen Eigenschaften sind nach dem Stand der Technik nur über die Teilchengröße und -form der Eisenoxid bzw.
-hydroxid-Ausgangsverbindungen optimiert worden. Bei Variation der Teilchengröße und -form ergeben besonders feinteilige Fe-oxid-Ausgangsverbindungen Fe-Metallpigmente, die neben hoher Speicherdichte, Sättigungsmagnetisierung und Remanenz stets Maximal-Werte für die Koerzitivfeldstärke aufzeigen. Hierbei entstehen Eisen-Magnetpigmente mit einer Sättigungsmagnetisierung von z.B. $M_S$ 184 [$mTcm^3/g$], einer Remanenz $M_R$ von etwa 115 [$mTcm^3/g$] und einer Koerzitivfeldstärke $H_C$ von 98.6 [kA/m] (EP-PS 0 015 485). Die magnetischen Eigenschaften von Produkten aus Hochtemperatur-Gasphasen-Reduktionsprozessen lassen sich durch thermische Nachbehandlung naturgemäß nicht mehr beeinflussen.

In der Praxis ist aber die Einstellung bestimmter Koerzitivkraftbereiche des einzusetzenden Magnetpigments wünschenswert. So erfordern z.B. Video-Home-System-Recorder $H_C$-Werte bis 50 kA/m, Super-VHS-Geräte arbeiten mit ca. 60 kA/m während andere Anwendungen wie Video-8-Camera-Recording und Digital-Audio-Tape oder neuerdings Datenaufzeichnungsgeräte im Computerbereich hochkoerzitive Materialien mit $H_C$-Werten von über 100 kA/m verlangen.

Es ist zwar bekannt, daß die Abhängigkeit von Koerzitivkraft und Remanenz von der Teilchengröße bei magnetischen Stoffen zur Einstellung der magnetischen Eigenschaften benutzt werden kann (EP-A-0 014 889), ein Verfahren zur Herstellung nadelförmiger Eisenmetallpigmente für die magnetische Signalaufzeichnung von hoher Sättigungsmagnetisierung $M_S$ (>160 $mTcm^3/g$) und Remanenz $M_R$ (>80$mTcm^3$), deren Koerzitivfeldstärke bei gegebener Fe-Kristallitgröße und Teilchengröße des Ausgangsmaterials einstellbar ist, ist jedoch nicht bekannt.

Der Erfindung liegt die Aufgabe zugrunde, durch Desoxygenierung von feinteiligen, nadelförmigen Eisenoxiden nadelförmige Eisen-Metallpigmente mit hohen Werten für Sättigungsmagnetisierung $M_S$ größer als 160 $mT.cm^3/g$ und Remanenz $M_R$ größer als 80 $mT.cm^3/g$ herzustellen, deren Koerzitivkraft $H_C$ zwischen 35 und 125 kA/m auf die vorgenannten Anwendungsbereiche eingestellt werden kann.

Es wurde nun überraschend gefunden, daß sich feinteilige, nadelförmige Eisenoxide - ggf. mit Zuschlägen ausgerüstet - unter organischen Solventien bereits bei Temperaturen zwischen 20 °C und 150 °C mit $H_2$ von 1 bis 200 bar glatt zu Eisen-Metallpigmenten umsetzen lassen, wenn Metallhydride der ersten bzw. zweiten Hauptgruppe des Periodischen Systems der Elemente (PSE) zugesetzt werden, die zwecks Solvatisierung in organischer Phase an einen Träger der allgemeinen Formel $BR_3$ oder $BR_n(OR')_{3-n}$ (R, R' = Alkyl, Aryl, Aralkyl; n = 0,1,2) komplex-gebunden sind. Als löslicher Hydrid-Trägerkomplex kann auch ein $NR''_4[BR_n(OR')_{3-n}H]$ oder $NR''_4[BR_3H]$ verwendet werden, das aus den entsprechenden Trägerkomplexen $MH_x \cdot (BR_3)_x$ oder $MH_x \cdot [BR_n(OR')_{3-n}]_x$ und Ammonium-Salzen $NR''_4Y$ zugänglich ist, wobei Y ein Anion und M ein Metall der ersten bzw. zweiten Hauptgruppe des PSE ist. Während der Umsetzung der

2

eingesetzten Eisenoxide u.s.w. mit $H_2$ gehen die komplexgebundenen Hydride in Metall- oder Ammonium-Sauerstoff-Verbindungen z.B. vom Typ $M(OH)_x \cdot (BR_3)_x$ oder $M(OH)_x \cdot [BR_n(OR')_{3-n}]_x$ ($x = 1,2$) über. Die Umsetzung wird vorzugsweise im Verlauf von 1 bis 100 Stunden, insbesondere im Verlauf von 4 bis 16 Stunden unter Rühren durchgeführt. Da die sauerstoffhaltigen Umsetzungsprodukte der Hydride vermöge der Komplexbildung mit dem Träger in Lösung bleiben, läßt sich nach Beendigung der Reaktion das Fe-Metallpigment durch einfache Filtration von der klaren organischen Lösung in reiner Form isolieren.

Ein Verfahren, das Ausgangsverbindungen, in denen Eisen an Sauerstoff gebunden ist, unterhalb der Desoxygenierungstemperatur im Gasphasenprozeß $H_2$ + Fe-oxide zu reduzieren vermag, ist bisher nicht bekannt.

In der vorliegenden Erfindung ist mit den Abkürzungen R, $R^1$ und $R^2$ die Alkylgruppe stets eine $C_1$ bis $C_6$-Alkylgruppe. Unter einer Arylgruppe im Sinne dieser Erfindung ist stets eine Phenylgruppe zu verstehen. Unter einer Arylalkylgruppe im Sinne dieser Erfindung ist stets eine Phenyl-$C_1$-$C_6$-alkylgruppe zu verstehen. Unter einer Trialkylsilylgruppe im Sinne dieser Erfindung ist stets eine Tri-$C_1$-$C_6$-alkylsilylgruppe zu verstehen.

Es wurde weiterhin überraschend gefunden, daß aus einem Eisenoxid gleicher Kristallitgröße (ca. 16 nm) Produkte mit hoher Sättigungsmagnetisierung und Remanenz (wie technisch erwünscht), jedoch niedriger Koerzitivfeldstärke (ca. 40 kA/m) erhalten werden. Geht man von Eisenoxiden höherer Kristallitgröße aus, z.B. ca. 24 nm, so werden sogar Fe-Pigmente noch geringerer Koerzitivfeldstärke erreicht (< 38 kA/m) (Tab. 6, Nr. 3,4,6,21). Der $H_C$-Wert der erfindungsgemäß hergestellten Pigmente kann aber jetzt thermisch im Vakuum oder unter Schutzgas bzw. inerter Flüssigkeit eingestellt bzw. erhöht werden. Je nach Dauer und angewendeter Temperatur läßt sich der $H_C$-Wert bei erfindungsgemäß hergestellten Fe-Magnetpigmenten in den erforderlichen Grenzen zwischen - 35 und 125 kA/m gezielt variieren. Bevorzugt ist ein Bereich von 50 bis 90 kA/m. Eine solche Magnetwert-Kombination ist nach dem Stand der Technik nicht erhältlich. Tabelle 1 faßt die Ergebnisse der thermischen Nachbehandlung verschiedener erfindungsgemäß hergestellter Fe-Magnetpigmente zusammen. In diesem Fall wurde bei festgelegter Zeitdauer (4 h) die Temperatur verändert; die Einstellung bestimmter $H_C$-Wert-Bereiche läßt sich jedoch zusätzlich durch Variation der Zeit erreichen.

Tabelle 1

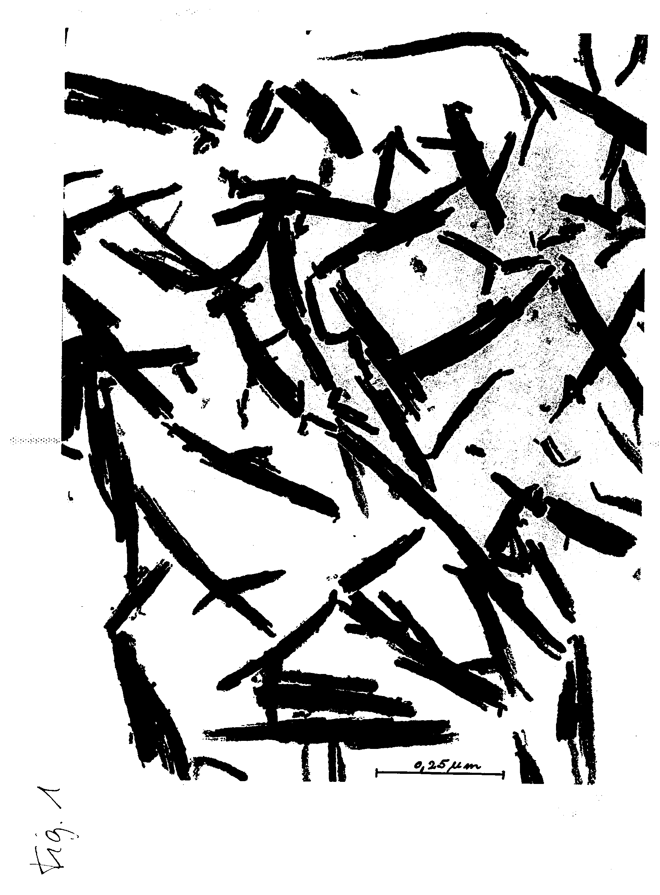

Fig. 1 zeigt eine elektronenmikroskopische Abbildung (Vergrößerung 1:200.000) eines erfindungsgemäß hergestellten Fe-Magnetpigments, das 4 h bei 250°C unter Wasserstoff nachbehandelt wurde (Tab. 1, Nr. 5). Obwohl ausgehend von nadelförmigem $\alpha$-FeOOH bei der Umsetzung zum Metall ein Volumenschwund von etwa 60% beobachtet wird, bleibt die Nadelform der oxidischen Ausgangsverbindung laut elektronenmikroskopischem Befund erhalten. Wie zu erkennen ist, bewirkt die Nachbehandlung keine unerwünschte Sinterung der Metallnadeln. Hingegen steigt der $H_C$-Wert des Fe-Magnetpigments durch die thermische Nachbehandlung von 82,2 kA/m im Primärprodukt auf 100,4 kA/m an. Ferner bewirkt die Nachbehandlung eine Glättung der Oberfläche: So zeigt das Primärprodukt eine spezifische Oberfläche von 36,1 $m^2$/g; im Anschluß an die thermische Nachbehandlung wurde eine spezifische Oberfläche von 23,0 $m^2$/g gemessen (siehe Tab. 2, Nr. 1).

Tabelle 2

Die thermische Nachbehandlung kann in Schutzgasatmosphäre (z.B. $H_2$, Ar), im Vakuum oder unter organischen Lösungsmitteln durchgeführt werden. Wie Tabelle 2 zeigt, ist das Ergebnis der thermischen Nachbehandlung von der Wahl des Mediums unabhängig. Die erfindungsgemäß hergestellten Fe-Metallpigmente können selbstverständlich weiteren Nachbehandlungen z.B. zwecks Stabilisierung gegen Oxidation und oder zur Beeinflussung der Dispergiereigenschaften unterzogen werden.

Gegenstand der vorliegenden Erfindung ist ferner ein Verfahren zur Herstellung der erfindungsgemäßen Metallpulver, das es erstmals gestattet, anisometrische FeOOH- oder $Fe_2O_3$-Ausgangsverbindungen verschiedener Kristallitgröße weit unterhalb der Desoxygenierungstemperatur im Gasphasenprozeß $H_2$ + Fe-oxid in organischer Phase zu nadelförmigen Fe-Magnetpigmenten umzusetzen, die einen hohen Desoxygenierungsgrad, hohe Sättigungsmagnetisierung und Remanenz mit vergleichsweise niedriger Koerzitivfeldstärke verbinden. Beansprucht wird ferner ein Verfahren zur thermischen Nachbehandlung der Primärprodukte zur Erhöhung bzw. Einstellung des $H_C$-Wertes auf Bereiche, wie sie die Arbeitspunkte bestimmter Gerätetypen erfordern.

Während nach dem Stand der Technik ein Entwässerungsschritt von $\alpha$-FeOOH zum $\alpha$-$Fe_2O_3$ vorgeschaltet wird, läßt sich nach dem erfindungsgemäßen Verfahren FeOOH in einer Stufe zum Metallpigment umsetzen, ohne daß die Nadelform der Ausgangsverbindung zerstört wird. Ausweislich der gemessenen Sättigungsmagnetisierung $M_S$ > 160 mTcm$^3$/g besitzen die erfindungsgemäß hergestellten Fe-Magnetpigmente einen hohen Desoxygenierungsgrad. Im Unterschied zu den Produkten aus dem Hochtemperatur-Verfahren (Stand der Technik) zeigen die erfindungsgemäß hergestellten, nadelförmigen Fe-Metallpigmente keinerlei Versinterung (Fig. 1).

Fig. 1

Die erfindungsgemäß eingesetzten Metallhydrid-Trägerkomplexe erhält man nach bekannten Verfahren (Liebigs Ann. Chemie 717 (1968) 21) durch Umsetzung von Alkali- und Erdalkalimetall-Hydriden mit organischen Verbindungen des dreifach koordinierten Bors vom Typ $BR_3$ bzw. $BR_n(OR')_{3-n}$ (R, R' = Alkyl, Aryl, Aralkyl; n = 0,1,2). Das erfindungsgemäße Verfahren läßt sich vorteilhaft auch so durchführen, daß der lösliche Metallhydrid-Trägerkomplex in situ aus Metallen der ersten bzw. zweiten Gruppe PSE, $H_2$ und dem bororganischen Träger bereitet wird. Soweit sie nicht ihrerseits mit Metallhydriden reagieren, eignen sich für das erfindungsgemäße Verfahren alle Arten organischer Solventien, z.B. Ether, Aliphaten, Aromaten sowie Mischungen verschiedener Lösungsmittel. Kennzeichen des erfindungsgemäß durchgeführten Verfahrens ist, daß der bororganische Träger durch Entkomplexierung der sauerstoffhaltigen Nebenprodukte auf einfache Weise regeneriert werden kann. Umsetzungen von $\alpha$-FeOOH mit $Na[BEt_3H]$ und $H_2$ in THF oder Dioxan ergeben z.B. laut $^{11}$B-NMR-Spektrum ($^{11}$B-Signal bei 1 ppm) in Lösung $Na[BEt_3OH]$. Aus diesem in der Reaktionslösung vorliegenden -at-Komplex erhält man durch Hydrolyse mit HCl/THF den Träger $BEt_3$ laut gaschromatographischer Analyse in 97%iger Ausbeute zurück. Entsprechende Ergebnisse werden mit Ether/Kohlenwasserstoff-Mischungen erreicht. Hohe Regenerationsraten an wiederverwendbarem Träger erzielt man vorzugsweise dann, wenn die Einsatzlösung pro Mol Hydrid/Trägerkomplex mindestens ein bis zwei Mol eines n-Donators z.B. Ethers als Stabilisator enthält. In reinen Kohlenwasserstoffen, d.h. in Abwesenheit eines stabilisierenden Elektronendonators (z.B. Ethers) zerfällt der resultierende -at-Komplex, z.B. $Na[BEt_3OH]$ in ein Metalloxyboran z.B. $NaOBEt_2$. Dieses kann nach Abtrennung der Magnetpigmentpulver in der Reaktionslösung mit metallorganischen Alkylierungsmitteln behandelt und z.B. in Form von Triorganoboran wiedergewonnen werden.

Beansprucht wird weiter ein Verfahren zur thermischen Nachbehandlung der erfindungsgemäß aus oxidischen Ausgangsverbindungen verschiedener Kristallitgröße hergestellten Fe-Metallpigmente zwecks Erhöhung bzw. Einstellung der Koerzitivfeldstärke $H_C$ zwischen ca. 50 und 125 kA/m, vorzugsweise 35 bis 90 kA/m. Die thermische Nachbehandlung kann im Vakuum, unter Schutzgasen wie Edelgas und/oder beispielsweise $H_2$ sowie inerten organischen Flüssigkeiten wie beispielsweise Dekalin durchgeführt werden. Bei festliegender Versuchszeit steigt der resultierende $H_C$-Wert mit zunehmender Temperatur an. Durch Anwendung verschiedener Nachbehandlungs-Temperaturen lassen sich gezielt bestimmte $H_C$-Wert-Bereiche aus ein und demselben Primärprodukt einstellen. Alternativ gelingt die $H_C$-Wert-Einstellung durch Variation der Versuchszeit. Ausweislich elektronenmikroskopischer Untersuchungen (vgl. Fig. 1) tritt während der thermischen Nachbehandlung keine unerwünschte Sinterung der Metallnadeln ein. Ein positiver Effekt der thermischen Nachbehandlung besteht weiter in einer Glättung der Oberfläche. So zeigt das erfindungsgemäß hergestellte Primärprodukt (Tab. 2, Nr. 1) eine spezifische Oberfläche nach BET von 36,1 $m^2$/g; im Anschluß an die Nachbehandlung werden 23,0 $m^2$/g gemessen. Die Glättung der Oberfläche erleichtert die weitere Verarbeitung der Fe-Magnetpigmente zur Herstellung von Magnetbändern, Platten, Floppy-Disks, Magnetkarten u.s.w.

Die erfindungsgemäßen Metallpigmente werden zur Herstellung von Magnetogrammträgern für die magnetische Informationsverarbeitung eingesetzt. Bänder auf der Basis dieser Pigmente zeigen ausgezeichnete magnetische Daten (Remanenz am Band > 300 mT, vorzugsweise ca. 350 mT; Ausrichtbarkeit $M_R/M_S$ > 0,80). Wegen ihres je nach Anwendung gezielt einstellbaren $H_C$-Wertes sind die erfindungsgemäßen Reineisenpigmente in magnetischen Aufzeichnungsträgern bei allen Arbeitspunkten des Audio- und Video-Bereichs in der Praxis vorteilhaft einsetzbar. Die erfindungsgemäßen Materialien ermöglichen es erstmals, Reineisenpigmente mit hoher Sättigungsmagnetisierung und Remanenz sowohl im niederkoerzitiven wie hochkoerzitiven Anwendungsbereich zu verwenden.

Die Erfindung wird nachfolgend anhand von Beispielen näher erläutert.

Tabelle 3

Beispiel 1

Herstellung von Eisenpigment aus FeOOH, Na, BEt$_3$ und H$_2$ in THF

In einem 500 ml Rührautoklaven werden 3,2 g (36 mmol) FeOOH (A 3) unter Schutzgas mit 4,0 g (174 mmol) Natrium, 27,9 g (285 mmol) Triethylboran und 260 ml THF versetzt. Man preßt bei Raumtemperatur 100 bar H$_2$ auf und erhitzt unter Rühren 16 Stunden auf 80°C. Nach Abkühlen auf Raumtemperatur und Abblasen des Wasserstoffs füllt man die schwarze Reaktionsmischung aus und trennt die klare überstehende Lösung vom Eisen-Pigment ab. Man wäscht das Eisen mit 300 ml THF, rührt mit 250 ml THF und 50 ml Ethanol bis Ende des Ausgasens und wäscht erneut mit 300 ml THF. Nach Trocknen im Hochvakuum (10$^{-3}$ mbar) erhält man 2,2 g Eisen-Pigment (s. Tab. 4, Nr. 6).

| | |
|---|---|
| Fe$^{(0)}$: | 71% |
| Fe$_{gesamt}$ | 84,45% |
| M$_S$ | 176 mTcm$^3$/g |
| M$_R$ | 94,4 mTcm$^3$/g |
| H$_C$ | 87,1 kA/m |

Tabelle 4

Beispiel 2

Herstellung von Eisenpigment aus Fe$_2$O$_3$, Na, BEt$_3$ und H$_2$ in Toluol

2,9 g (18 mmol) Fe$_2$O$_3$ (B 4) werden unter Schutzgas in einem 500 ml Rührautoklaven mit 4,0 g (174 mmol) Natrium, 27,4 g (280 mmol) Triethylboran und 260 ml Toluol versetzt. Bei Raumtemperatur preßt man 100 bar H$_2$ auf und erhitzt unter Rühren 16 Stunden auf 80°C. Nach Abkühlen auf Raumtemperatur sowie Abblasen des Wasserstoffs füllt man eine schwarze Reaktionsmischung aus und trennt das Eisenpigment von der klaren überstehenden Reaktionslösung ab. Man wäscht das Eisen mit 250 ml THF, rührt anschließend mit 250 ml THF sowie 50 ml Ethanol bis Ende des Ausgasens, wäscht erneut mit 300 ml THF nach und erhält nach Trocknen im Hochvakuum (10$^{-3}$ mbar) 2,4 g Eisenpigment (s. Tab. 5, Nr. 2).

| | |
|---|---|
| Fe$^{(0)}$: | 73,8% |
| Fe$_{gesamt}$ | 83,4% |
| M$_S$ | 169 mTcm$^3$/g |
| M$_R$ | 82,3 mTcm$^3$/g |
| H$_C$ | 67,1 kA/m |
| Oberfläche nach BET: | 43,1 m$^2$/g |

Tabelle 5

Beispiel 3

Herstellung von Eisenpigment aus FeOOH, Na[BEt$_3$H] und H$_2$ in Toluol

96 g (1,078 mol) FeOOH (A 3) werden in einem 5 l-Rührautoklaven unter Schutzgas mit 1,22 l 2,67 molarer (3,257 mol) Na[BEt$_3$H]-Lösung in Toluol versetzt und mit Toluol auf ein Arbeitsvolumen von 3,0 l aufgefüllt. Man preßt bei Raumtemperatur unter Rühren 100 bar H$_2$ auf und erhitzt 16 Stunden auf 80°C. Nach Abkühlen auf Raumtemperatur bläst man den Wasserstoff ab und füllt die schwarze Reaktionsmischung aus. Die überstehende klare Lösung wird vom Eisen-Pigment abgetrennt und das Eisen mit 1,5 l THF gewaschen. Anschließend rührt man mit 1,5 l THF und 0,4 l Ethanol bis Ende des Ausgasens, wäscht erneut mit 1,5 l THF und erhält nach Trocknen im Hochvakuum (10$^{-3}$ mbar) 63,7 g Eisenpigment (s. Tab. 6,

Nr. 10).

| Fe$^{(0)}$: | 81,6% |
|---|---|
| Fe$_{gesamt}$ | 87,87% |
| M$_S$ | 193,0 mTcm$^3$/g |
| M$_R$ | 101,3 mTcm$^3$/g |
| H$_C$ | 82,2 kA/m |

Beispiel 4

Herstellung von Eisenpigment aus FeOOH, Na[BEt$_3$H] und H$_2$ in THF

In einem 500 ml Rührautoklaven werden 3,2 g (36 mmol) FeOOH (A 3) unter Schutzgas mit 61,2 ml einer 1,47 molaren (90 mmol) Lösung von Na[BEt$_3$H] in THF versetzt und mit THF auf ein Arbeitsvolumen von 200 ml aufgefüllt. Bei Raumtemperatur preßt man 100 bar H$_2$ auf und erhitzt unter Rühren 16 Stunden auf 80°C. Nach Abkühlen auf Raumtemperatur und Abblasen des Wasserstoffs füllt man die schwarze Reaktionsmischung aus und trennt die klare Reaktionslösung vom Eisenpigment ab. Man wäscht das Eisen mit 300 ml THF, rührt mit 250 ml THF sowie 50 ml Ethanol bis Ende des Ausgasens, wäscht erneut mit 300 ml THF nach und erhält nach Trocknen im Hochvakuum (10$^{-3}$ mbar) 2,1 g Eisenpigment (s. Tab. 6, Nr.14).

| Fe$^{(0)}$: | 77,6% |
|---|---|
| Fe$_{gesamt}$ | 87,5% |
| M$_S$ | 175,5 mTcm$^3$/g |
| M$_R$ | 86,7 mTcm$^3$/g |
| H$_C$ | 65,3 kA/m |

Tabelle 6

Beispiel 5

Herstellung von Eisenpigment aus Fe$_2$O$_3$, Na[BEt$_3$H] und H$_2$ in Toluol

2,9 g (18 mmol) Fe$_2$O$_3$ (B 1) werden in einem 500 ml Rührautoklaven unter Schutzgas mit 21,4 g (175 mmol) Na[BEt$_3$H] gelöst in 270 ml Toluol versetzt. Man preßt bei Raumtemperatur 100 bar H$_2$ auf und erhitzt unter Rühren 16 Stunden auf 80°C. Nach Abkühlen auf Raumtemperatur bläst man den Wasserstoff ab und füllt eine schwarze Reaktionsmischung aus. Das Eisenpigment wird von der überstehenden klaren Lösung abgetrennt und mit 300 ml THF gewaschen. Man rührt anschließend mit 250 ml THF sowie 50 ml Ethanol bis Ende des Ausgasens, wäscht erneut mit 300 ml THF nach und erhält nach Trocknen im Hochvakuum (10$^{-3}$ mbar) 2,2 g Eisenpigment (Tab. 7, Nr. 5).

| Fe$^{(0)}$: | 79,5% |
|---|---|
| Fe$_{gesamt}$ | 88,3% |
| M$_S$ | 204 mTcm$^3$/g |
| M$_R$ | 95 mTcm$^3$/g |
| H$_C$ | 70,4 kA/m |
| Oberfläche nach BET: | 23,2 m$^2$/g |

Tabelle 7

Beispiel 6

Darstellung von NBu$_4$[BEt$_3$H]

545,6 g (1,66 mol) Tetrabutylammonium-Tetrafluoroborat werden gelöst in 1250 ml THF unter Rühren bei Raumtemperatur in 3 $\frac{1}{2}$ Stunden mit 679 ml einer 2,455 molaren (1,66 mol) Lösung von Na[BEt$_3$H] in THF versetzt, wobei sofort weißes NaBF$_4$ ausfällt. Nach einer weiteren Stunde filtriert man das ausgefallene NaBF$_4$ über eine D4-Glasfritte ab (171,87 g = 1,56 mol), engt das klare Filtrat bis zur Trockene im Hochvakuum (10$^{-3}$ mbar) ein und erhält 580,8 g Tetrabutylammonium-Triethylhydroborat als weiße, hochviskose Masse.
Hydridbestimmung mit 1N Salzsäure: 2,36 g (6,92 mmol) Borat ergeben 153,4 Nml H$_2$ = 6,85 mmol = 97,8% Hydridgehalt.
$^{11}$B-NMR-Spektrum (THF)
$\delta$ = 12,4 ppm (s)

Herstellung von Eisenpigment aus FeOOH, NBu$_4$[BEt$_3$H] und H$_2$ in THF

20,6 g (90 mmol) des so erhaltenen Borates werden in 200 ml THF mit 1,6 g (18 mmol) FeOOH (A 3) analog Beispiel 4 64 Stunden bei 40°C umgesetzt. Die Ergebnisse der Umsetzung siehe Tabelle 6, Versuch Nr. 32.

Beispiel 7

Einstellen der Koerzitivfeldstärke H$_C$ durch thermische Nachbehandlung

Von einem Eisenpigment, erhalten aus Versuch Nr. 22, Tab. 6, mit den Ausgangsmagnetwerten M$_S$ = 175 mTcm$^3$/g, M$_R$ = 75 mTcm$^3$/g und H$_C$ = 44,1 kA/m werden je 5 g in einem Glasgefäß mit Thermofühler unter H$_2$-Atmosphäre in einem Sandbad je 4 h auf 200°C, 250°C bzw. 300°C erhitzt. Die resultierenden Koerzitivfeldstärken H$_C$ siehe
Tab. 1, Nr. 8.

Beispiel 8

Regeneration des Trägers Triethylboran

Zu der in Beispiel 4 vom Eisenpigment abgetrennten klaren Reaktionslösung wird unter Schutzgas und Rühren innerhalb 20 Minuten 27 ml einer 3,5 molaren (94,5 mmol) Lösung von HCl in THF getropft, wobei nach kurzem Aufschäumen und leichter Erwärmung ein weißer Niederschlag ausfällt (NaCl). Die Reaktions-mischung wird mit Na$_2$CO$_3$ neutralisiert und über eine D3-Glasfritte abfiltriert. Man erhält 204,1 g klares Filtrat das laut gaschromatographischer Analyse 4,20% (8,57 g = 87,5 mmol) Triethylboran enthält. Somit werden 97,2% des Trägers Triethylboran bezogen auf eingesetzten Trägerkomplex wiedergewonnen.

Beispiel 9

Regeneration des Trägers Tripropylboran

Die klare, vom Eisenpigment abgetrennte Reaktionslösung aus Nr. 12, Tabelle 6 wird analog Beispiel 8 aufgearbeitet und analysiert. Es werden 92,8% Tripropylboran wiedergewonnen.

Beispiel 10

Regeneration des Trägers Triethylboran

Die klare, vom Eisenpigment abgetrennte Reaktionslösung aus Nr. 22, Tab. 6 wird bei 170-180°C zu einer Lösung von 96,1 g (843 mmol) Triethylaluminium in 250 ml Dekalin getropft, wobei das gebildete Triethylboran zusammen mit dem Lösungsmittel direkt abdestilliert. Man erhält 1092,4 g Destillat, das laut gaschromatographischer Analyse 6,18% (67,5 g = 688,8 mmol) Triethylboran enthält. Somit werden 81,7% des Trägers Triethylboran bezogen auf eingesetzten Trägerkomplex wiedergewonnen.

Beispiel 11

Darstellung von $CaH_2 \cdot (BEt_3)_2$

9,0 g (225 mmol) Calcium-Metall (grob-kristallin) werden unter Schutzgas in einem 200 ml Glasgefäß (Glaseinsatz für Autoklaven mit Strombrecher und Glaskugeln) mit 51,5 g (525 mmol) Triethylboran und 75 ml Diglyme versetzt und das Gefäß in einen 500 ml Rührautoklaven überführt. Man thermostatisiert den Druckbehälter auf 90°C, preßt 100 bar $H_2$ auf und startet die Reaktion durch Anschalten der Rührung. Der Versuch wird isobar durchgeführt, d.h. verbrauchter Wasserstoff wird aus einer Vorratsbombe über ein Druckminderungsventil nachgeführt. Der Druckabfall in der Vorratsbombe wird mit einem Schreiber aufgezeichnet. Nach 40 Minuten sind unter kurzzeitigem Temperaturanstieg auf 108°C ca. 50% der erforderli-chen $H_2$-Menge aufgenommen; nach insgesamt 3 ½ Stunden Reaktionszeit ist die $H_2$-Aufnahme beendet. Man läßt Abkühlen, bläst den Wasserstoff ab und erhält eine leicht trübe graue Reaktionsmischung mit nicht umgesetztem Calcium-Metall. Hiervon filtriert man über eine D4-Glasfritte ab (1,38 g Ca zurück = 34,5 mmol) und engt das Filtrat im Hochvakuum ($10^{-3}$ mbar) bei 50°C ein. Zur Hydridgehalt-Bestimmung füllt man den hochviskosen Rückstand mit THF auf 250 ml auf und erhält laut Protolyse mit 1N HCl eine 0,75 molare Lösung von $CaH_2 \cdot (BEt_3)_2$ = 188,0 mmol Borat = 98,7% [bezogen auf umgesetztes Calcium (190,5 mmol)].

Herstellung von Eisenpigment aus FeOOH, $CaH_2 \cdot (BEt_3)_2$ und $H_2$ in THF

220 ml (165 mmol) der so erhaltenen 0,75 molaren Lösung von $CaH_2 \cdot (BEt_3)_2$ in THF werden mit 3,2 g (36 mmol) FeOOH (A 5) in einem 500 ml Schüttelautoklaven unter 200 bar $H_2$-Druck 72 Stunden bei 74°C umgesetzt. Die Ergebnisse der Umsetzung siehe Tab. 6, Nr. 2.

Beispiel 12

Regeneration des Trägers Triethylboran

Die klare, vom Eisenpigment abgetrennte Reaktionslösung aus Versuch 21, Tabelle 7, wird unter Schutzgas und Rühren tropfenweise mit dest. Wasser versetzt bis keine Gasentwicklung mehr zu beobachten ist (ca. 4 - 5 ml). Dann fügt man 175.8 g (632,4 mmol) festes $FeSO_4 \cdot 7 H_2O$ hinzu. Nach 1 - 2 Stunden Rühren wird vom hellbraunen Niederschlag abfiltriert und portionsweise mit THF nachgewaschen. Das klare Filtrat (1130,5 g) enthält laut $^{11}$B-NMR-Spektrum (Signal bei 86,24 ppm) und gaschromatographischer Analyse 7,17 % (81,1 g = 827,5 mmol) reines Triethylboran. Somit werden bezogen auf eingesetzten Trägerkomplex 98,1 % des Trägers Triethylboran wiedergewonnen.

Tabelle 1: Einstellung der Koerzitivfeldstärke $H_C$ bei erfindungsgemäßen Fe–Pigmenten durch thermische Nachbehandlung (4 h) bei verschiedenen Temperaturen

| Nr. | Ausgangs-stoff FeOOH | Fe$_2$O$_3$ | M$_S$ [mTcm³/g] | M$_R$ [mTcm³/g] | H$_C$ [kA/m] unbeh. | 150°C | 200°C | 250°C | 300°C | 350°C |
|---|---|---|---|---|---|---|---|---|---|---|
| 1 | A 3 | | 225,0 | 86,0 | 35,5 | – | 71,4 | 74,0 | 67,4 | 75,7 |
| 2 | A 3 | | 204,6 | 97,3 | 54,6 | – | 83,5 | 90,1 | – | – |
| 3 | A 5 | | 197,6 | 102,1 | 67,0 | – | 81,4 | 84,4 | – | – |
| 4 | A 3 | | 205,9 | 99,3 | 75,4 | – | 100,1 | 108,9 | – | – |
| 5 | A 3 | | 193,0 | 101,3 | 82,2 | 83,0 | 99,8 | 100,4 | 98,2 | – |
| 6 | A 3 | | 209,0 | 103,0 | 65,9 | – | 98,4 | 104,9 | 104,1 | 94,9 |
| 7 | A 7 | | 189,0 | 80,0 | 40,1 | – | 54,1 | 57,6 | 54,2 | – |
| 8 | A 8 | | 175,0 | 75,0 | 44,1 | – | 72,3 | 87,4 | 96,1 | – |
| 9 | A 1 | | 216,0 | 106,0 | 62,3 | 82,1 | 80,8 | 81,9 | 80,9 | 62,7 |
| 10 | A 3 | | 184,0 | 102,0 | – | – | – | 114,2 | – | – |
| 11 | A 3 | | 207,0 | 107,0 | 79,1 | – | – | 121,9 | – | – |
| 12 | | B 3 | 210,0 | 99,0 | 58,8 | – | 75,8 | 78,0 | 77,2 | – |
| 13 | | B 5 | 188,0 | 93,0 | 64,3 | – | 83,0 | 89,4 | 99,0 | – |

EP 0 379 062 B1

Tabelle 2:  Thermische Nachbehandlung erfindungsgemäßer Fe–Pigmente (4 h) unter verschiedenen Medien.

| Nr. | Fe-Pigment (unbehandelt) | | | | $H_2$-Schutzgas (250°C) | | | | Ar–Schutzgas (250°C) | | | Vakuum (250°C) | | | Dekalin (250°C) | | |
|---|---|---|---|---|---|---|---|---|---|---|---|---|---|---|---|---|---|
| | $M_S$ | $M_R$ | $H_C$ | BET | BET | $M_S$ | $M_R$ | $H_C$ | $M_S$ | $M_R$ | $H_C$ | $M_S$ | $M_R$ | $H_C$ | $M_S$ | $M_R$ | $H_C$ |
| | [mTcm³/g] | [mTcm³/g] | [kA/m] | [m²/g] | [m²/g] | [mTcm³/g] | [mTcm³/g] | [kA/m] | [mTcm³/g] | [mTcm³/g] | [kA/m] | [mTcm³/g] | [mTcm³/g] | [kA/m] | [mTcm³/g] | [mTcm³/g] | [kA/m] |
| 1 | 193,0 | 101,3 | 82,2 | 36,1 | 23,0 | 199,0 | 111,6 | 100,4 | 204,0 | 114,0 | 101,6 | 203,0 | 113,0 | 101,4 | | | |
| 2 | 223 | 107 | 57,9 | | | 162,5 | 88,7 | 101,0 | | | | | | | 178,1 | 96,9 | 102,0 |

Tabelle 3

| verwendete Ausgangsmaterialien | | | |
|---|---|---|---|
| Typ | spez. Oberfläche BET ($m^2$/g) | Kristallitgröße (nm) | Kennung |
| FeOOH | 34,3 | - | A 1 |
| FeOOH | 35,6 | - | A 2 |
| FeOOH | 45,4 | 16,0 | A 3 |
| FeOOH | 46,8 | 24,0 | A 4 |
| FeOOH | 59,5 | - | A 5 |
| FeOOH | 85,3 | - | A 6 |
| FeOOH | 107,6 | - | A 7 |
| FeOOH | 138,0 | - | A 8 |
| $Fe_2O_3$ | 21,0 | - | B 1 |
| $Fe_2O_3$ | 26,9 | - | B 2 |
| $Fe_2O_3$ | 35,7 | - | B 3 |
| $Fe_2O_3$ | 49,6 | - | B 4 |
| $Fe_2O_3$ | 59,9 | - | B 5 |

Tabelle 4: Herstellung von Eisenpigmenten aus FeOOH, Metall M, Träger und $H_2$ in Lösemitteln

| Nr. | Ausgangsstoff Name | [mmol] | M | [mmol] | Träger | [mmol] | Lösemittel | [ml] | $H_2$-Druck [bar] | T [°C] | Zeit [h] | $M_S$ [mTcm³/g] | $M_R$ [mTcm³/g] | $H_C$ [kA/m] |
|---|---|---|---|---|---|---|---|---|---|---|---|---|---|---|
| 1 | A 6 | 18 | Ca | 45 | BEt₃ | 140 | Diglyme | 130 | 100 | 75 | 96 | – | – | – |
| 2 | A 6 | 36 | Li | 180 | BEt₃ | 280 | THF | 260 | 100 | 75 | 65 | – | – | – |
| 3 | A 6 | 36 | K/Na | 180 | BEt₃ | 280 | THF | 260 | 100 | 75 | 4 | – | – | – |
| 4 | A 6 | 36 | K | 180 | BEt₃ | 280 | THF | 260 | 100 | 75 | 4 | – | – | – |
| 5 | A 6 | 36 | Na | 174 | BEt₃ | 280 | THF | 260 | 100 | 75 | 4 | 154 | 51,1 | 38 |
| 6 | A 3 | 36 | Na | 174 | BEt₃ | 285 | THF | 260 | 100 | 80 | 16 | 176 | 94,4 | 87,1 |
| 7 | A 3 | 36 | Na | 174 | BEt₃ | 282 | THF | 260 | 40 | 50 | 20 | 129,7 | 60 | 86 |
| 8 | A 3 | 36 | Na | 90 | BEt₃ | 90 | THF | 137 | 100 | 80 | 16 | 193 | 80 | 51,1 |

Tabelle 5: Herstellung von Eisenpigmenten aus $Fe_2O_3$, Metall M, Träger und $H_2$ in Lösemitteln

| Nr. | Ausgangsstoff | | | | | | Lösemittel | | $H_2$–Druck | T | Zeit | $M_S$ | $M_R$ | $H_C$ |
|---|---|---|---|---|---|---|---|---|---|---|---|---|---|---|
| | Name | [mmol] | M | [mmol] | Träger | [mmol] | | [ml] | [bar] | [°C] | [h] | [mTcm³/g] | [mTcm³/g] | [kA/m] |
| 1 | B 2 | 18 | Na | 174 | BEt₃ | 285 | THF | 260 | 100 | 75 | 4 | 140,6 | 52 | 96 |
| 2 | B 4 | 18 | Na | 174 | BEt₃ | 280 | Toluol | 260 | 100 | 80 | 16 | 169 | 82,3 | 67,1 |
| 3 | B 4 | 18 | Na | 174 | BEt₃ | 280 | Toluol | 260 | 100 | 115 | 16 | 169 | 78,6 | 51,2 |
| 4 | B 3 | 18 | Na | 174 | BEt₃ | 280 | THF | 260 | 100 | 80 | 16 | 206 | 95 | 53,2 |
| 5 | B 5 | 18 | Na | 174 | BEt₃ | 280 | THF | 260 | 100 | 80 | 16 | 195 | 82 | 55,8 |
| 6 | B 1 | 18 | Na | 174 | BEt₃ | 280 | THF | 260 | 100 | 80 | 16 | 206 | 92,3 | 53,8 |
| 7 | B 1 | 36 | Na | 348 | BEt₃ | 560 | THF | 520 | 200 | 80 | 16 | 204 | 97,3 | 59,5 |
| 8 | B 4 | 18 | Na | 172 | BEt₃ | 280 | THF | 260 | 100 | 115 | 16 | 186 | 89 | 58,1 |
| 9 | B 1 | 18 | Na | 72 | BEt₃ | 72 | THF | 139 | 100 | 80 | 16 | 177 | 76 | 44,7 |

Tabelle 6: Herstellung von Eisenpigmenten aus FeOOH, Boraten und $H_2$ in Lösemitteln

| Nr. | Ausgangsstoff | | | | Lösemittel | $H_2$–Druck | T | Zeit | $M_S$ | $M_R$ | $H_C$ |
|---|---|---|---|---|---|---|---|---|---|---|---|
| | Name | [mmol] | Träger–Komplex | [mmol] | | [bar] | [°C] | [h] | [mTcm³/g] | [mTcm³/g] | [kA/m] |
| 1 | A 5 | 36 | Ca[(BEt₃H)₂] | 165 | THF | 200 | 75 | 47 | – | 40,1 | 47,0 |
| 2 | A 5 | 36 | Ca[(BEt₃H)₂] | 165 | THF | 200 | 74 | 72 | 73,5 | 40,1 | 47,3 |
| 3 | A 4 | 36 | Na[BEt₃]H | 174 | THF | 50 | 80 | 2,5 | 212 | 85,4 | 33,3 |
| 4 | A 4 | 36 | Na[BEt₃]H | 176 | THF | 100 | 80 | 16 | 216 | 82,0 | 37,9 |
| 5 | A 3 | 36 | Na[BEt₃]H | 176 | THF | 100 | 80 | 16 | 216 | 93,0 | 42,4 |
| 6 | A 4 | 36 | K[BEt₃H] | 176 | THF | 100 | 80 | 16 | 210 | 88,0 | 35,0 |
| 7 | A 3 | 36 | Na[BEt₃H] | 176 | Toluol | 100 | 81 | 4 | 220,0 | 97,0 | 69,8 |
| 8 | A 2 | 360 | Na[BEt₃H] | 1760 | Toluol | 100 | 80 | 16 | 197,6 | 102,1 | 67,0 |
| 9 | A 3 | 429 | Na[BEt₃H] | 2146 | Toluol | 100 | 80 | 16 | 205,9 | 99,3 | 75,4 |
| 10 | A 3 | 1078 | Na[BEt₃H] | 3257 | Toluol | 100 | 80 | 16 | 193,0 | 101,3 | 82,2 |
| 11 | A 3 | 1685 | Na[BEt₃H] | 4990 | Toluol | 100 | 80 | 16 | 188,0 | 100,7 | 85,0 |
| 12 | A 3 | 36 | Na[BPr₃H] | 80 | Toluol | 100 | 80 | 10 | – | – | – |
| 13 | A 3 | 432 | Na[BEt₃H] | 2110 | Toluol | 100 | 80 | 16 | 178,1* | 96,9* | 102,0* |
| 14 | A 3 | 36 | Na[BEt₃H] | 90 | THF | 100 | 80 | 16 | 175,5 | 86,7 | 65,3 |
| 15 | A 3 | 36 | Na[BEt₃H] | 90 | Dioxan | 100 | 80 | 16 | – | – | – |
| 16 | A 3 | 337 | Na[BEt₃H] | 848 | THF | 100 | 80 | 16 | 204,6 | 97,3 | 54,6 |
| 17 | A 3 | 2373 | Na[BEt₃H] | 11610 | Toluol | 100 | 80 | 16 | 222,7 | 106,7 | 61,2 |
| 18 | A 2 | 1716 | Na[BEt₃H]/BEt₃ | 8584 | Toluol | 100 | 80 | 16 | 202,4 | 109,8 | 83,3 |

Tabelle 6: Fortsetzung

| Nr. | Ausgangsstoff | | Träger–Komplex | | Lösemittel | $H_2$–Druck | T | Zeit | $M_S$ | $M_R$ | $H_C$ |
|---|---|---|---|---|---|---|---|---|---|---|---|
| | Name | [mmol] | | [mmol] | | [bar] | [°C] | [h] | [mTcm³/g] | [mTcm³/g] | [kA/m] |
| 19 | A 7 | 337 | Na[BEt₃H] | 843 | Toluol | 100 | 80 | 16 | 189 | 80 | 40,1 |
| 20 | A 3 | 337 | Na[BEt₃H] | 843 | Toluol/THF(80:20) | 100 | 80 | 16 | 209 | 103 | 65,9 |
| 21 | A 4 | 337 | Na[BEt₃H] | 843 | THF | 100 | 80 | 16 | 225 | 86 | 35,5 |
| 22 | A 8 | 337 | Na[BEt₃H] | 843 | Toluol | 100 | 80 | 16 | 175 | 75 | 44,1 |
| 23 | A 7 | 1685 | Na[BEt₃H] | 4213 | Toluol | 100 | 80 | 16 | 183* | 103* | 81,4* |
| 24 | A 8 | 1685 | Na[BEt₃H] | 4214 | Toluol | 100 | 80 | 16 | 151* | 83* | 100,5* |
| 25 | A 2 | 36 | NaH·Et₂B–OMe | 180 | Toluol | 100 | 80 | 16 | 191 | 90 | 59,9 |
| 26 | A 1 | 1685 | Na[BEt₃H] | 4214 | Toluol | 100 | 80 | 16 | 216 | 106 | 62,3 |
| 27 | A 3 | 1685 | Na[BEt₃H] | 4214 | Toluol | 100 | 80 | 16 | 184* | 102* | 114,2* |
| 28 | A 3 | 36 | NaH·Et₂B–O–BEt₂ | 180 | THF | 100 | 80 | 16 | 181 | 89 | 68,4 |
| 29 | A 3 | 36 | NaH·Et₂BH | 180 | Toluol | 100 | 80 | 16 | -- | – | – |
| 30 | A 3 | 36 | Li[BEt₃H] | 180 | THF | 100 | 80 | 16 | 114 | 15 | 3,0 |
| 31 | A 3 | 36 | Na[B(OMe)₃H] | 180 | THF | 100 | 80 | 16 | 17 | 5 | 31,2 |
| 32 | A 3 | 18 | NBu₄[BEt₃H] | 90 | THF | 100 | 40 | 64 | 59 | 10 | 21,6 |
| 33 | A 3 | 36 | Na[BEt₃H] | 180 | Toluol | 10 | 80 | 16 | 220 | 91 | 58,0 |
| 34 | A 3 | 36 | Na[BEt₃H] | 180 | Toluol | 100 | 120 | 4 | 210 | 100 | 68,3 |
| 35 | A 3 | 72 | Na[BEt₃H] | 360 | Toluol | 100 | 40 | 16 | 207 | 107 | 79,1 |

*   bei 250°C nachbehandelt

EP 0 379 062 B1

Tabelle 7: Herstellung von Eisenpigmenten aus $Fe_2O_3$, Boraten und $H_2$ in Lösemitteln

| Nr. | Ausgangsstoff | | | | Lösemittel | $H_2$-Druck | T | Zeit | $M_S$ | $M_R$ | $H_C$ |
|---|---|---|---|---|---|---|---|---|---|---|---|
| | Name | [mmol] | Träger-Komplex | [mmol] | | [bar] | [°C] | [h] | [mTcm³/g] | [mTcm³/g] | [kA/m] |
| 1 | B 5 | 18 | K[BEt$_3$H] | 176 | THF | 100 | 80 | 16 | 172 | 85 | 61,7 |
| 2 | B 3 | 18 | Na[BEt$_3$H] | 176 | Toluol | 100 | 80 | 16 | 197 | 75 | 43,5 |
| 3 | B 5 | 18 | Na[BEt$_3$H] | 176 | Toluol | 100 | 80 | 16 | 157 | 77 | 70,0 |
| 4 | B 1 | 18 | Na[BEt$_3$H] | 175 | Toluol | 100 | 80 | 16 | 201 | 94,6 | 74,3 |
| 5 | B 1 | 18 | Na[BEt$_3$H] | 175 | Toluol | 100 | 80 | 16 | 204 | 95 | 70,4 |
| 6 | B 3 | 168 | Na[BEt$_3$H] | 674 | Toluol | 100 | 80 | 16 | 210 | 99 | 58,8 |
| 7 | B 5 | 168 | Na[BEt$_3$H] | 674 | Toluol | 100 | 80 | 16 | 188 | 93 | 64,3 |
| 8 | B 4 | 18 | Na[BEt$_3$H] | 175 | THF | 100 | 115 | 16 | 169 | 82,6 | 64,1 |
| 9 | B 4 | 18 | Na[BEt$_3$H] | 175 | Toluol | 100 | 80 | 16 | 182 | 84,1 | 54,6 |
| 10 | B 4 | 18 | Na[BEt$_3$H] | 175 | Toluol | 100 | 115 | 16 | 166 | 76,8 | 55,8 |
| 11 | B 1 | 18 | K[B(OMe)$_3$H] | 180 | THF | 100 | 80 | 16 | 195 | 75,0 | 36,1 |
| 12 | B 5 | 1685 | Na[BEt$_3$H] | 3370 | Toluol | 100 | 80 | 16 | 179* | 97* | 89,7* |
| 13 | B 1 | 36 | NaH·Et$_2$B-OMe | 180 | Toluol | 100 | 80 | 16 | 180 | 76 | 57,0 |
| 14 | B 1 | 18 | Na[B(OMe)$_3$H] | 180 | THF | 100 | 80 | 16 | 96 | 24 | 12,3 |
| 15 | B 1 | 9 | NBu$_4$[BEt$_3$H] | 90 | THF | 100 | 40 | 64 | 17 | 5 | 32,4 |
| 16 | B 1 | 18 | Na[B(OEt)$_3$H] | 180 | THF | 100 | 80 | 16 | 87 | 29 | 29,5 |

* bei 300°C nachbehandelt

EP 0 379 062 B1

**Patentansprüche**

**Patentansprüche für folgende Vertragsstaaten : AT, BE, DE, DK, FR, GB, IT, LU, NL, SE**

1. Nadelförmige Eisen-Metallpigmente für die magnetische Signalaufzeichnung, von hoher Speicherdichte, hoher Sättigungsmagnetisierung $M_S$ (> 160 $mTcm^3/g$) und Remanenz $M_R$ (> 80 $mTcm^3/g$), deren Koerzitivfeldstärke $H_C$ bei gegebener Kristallitgröße des Ausgangsmaterials durch thermische Nachbehandlung zwischen 35 kA/m und 125 kA/m einstellbar ist.

2. Nadelförmige Eisen-Metallpigmente nach Anspruch 1, dadurch gekennzeichnet, daß die Sättigungsmagnetisierung im Bereich von 160 bis 225 $mT.cm^3/g$ und die Remanenz $M_R$ 80 bis 115 $mT.cm^3/g$ beträgt.

3. Nadelförmige, unversinterte Eisen-Metallpigmente für die magnetische Signalaufzeichnung, von hoher Speicherdichte, hoher Sättigungsmagnetisierung $M_S$ (> 160 $mTcm^3/g$) und Remanenz $M_R$ (> 80 $mTcm^3/g$), deren Koerzitivfeldstärke bei einer Kristallitgröße des Ausgangsmaterials im Bereich von 16 nm $H_C$ 35 bis 90 kA/m beträgt.

4. Verfahren zur Herstellung von nadelförmigen Eisen-Metallpigmenten dadurch gekennzeichnet, daß man feinteiliges nadelförmiges Eisenoxid-hydroxid oder Eisenoxid - ggf. mit Zuschlägen ausgerüstet - in organischen Solventien weit unterhalb der Desoxygenierungstemperatur im Gasphasenprozeß $H_2$ + Fe-Oxide bei 20°C - 150°C, 1 bis 100 h, vorzugsweise 4 bis 16 h unter Rühren vorzugsweise unterhalb 100°C, mit $H_2$ von 1 - 200 bar, vorzugsweise von 50 - 100 bar und Metallhydriden $MH_x$ (x = 1,2) umsetzt, welche mit einem regenerierbaren Träger der allgemeinen Formel $BR_3$, $BR_n(OR')_{3-n}$, BROR'H oder $BR_nH_{3-n}$ (R, R' = $C_1$-$C_6$-Alkyl, Ar-$C_1$-$C_6$-alkyl; n = 0,1,2) in Form eines Trägerkomplexes $MH_x$ . $[BR_3]_x$, $MH_x$ . $[BR_n(OR')_{3-n}]_x$, $MH_x$ . $[BROR'H]_x$ $MH_x$ . $[BR_nH_{3-n}]_x$ oder $NR''_4[BR_n(OR')_{3-n}H]$ ($R''_4$ = $C_1$-$C_6$-Alkyl, Aryl(phenyl), Ar-$C_1$-$C_6$-alkyl, Tri-$C_1$-$C_6$-alkylsilyl; in organischer Phase solvatisiert sind, wobei die Pigmente sich von der klaren organischen Lösung durch Filtration unmittelbar abtrennen lassen.

5. Verfahren nach Anspruch 4, dadurch gekennzeichnet, daß das Metallhydrid $MH_x$ ein Metall M der 1. bzw. 2. Gruppe des Periodensystems der Elemente (PSE) enthält.

6. Verfahren nach Anspruch 4, dadurch gekennzeichnet, daß der lösliche Metallhydrid-Trägerkomplex in-situ aus Metallen der 1. bzw. 2. Gruppe des PSE, $H_2$ und dem Träger bereitet wird.

7. Verfahren nach Anspruch 4, dadurch gekennzeichnet, daß als löslicher Hydrid-Trägerkomplex ein $NR''_4[BR_n(OR')_{3-n}H]$ oder $NR''_4[BR_3H]$ (R = $C_1$-$C_6$-Alkyl, Ar-$C_1$-$C_6$-alkyl; R' = $C_1$-$C_6$-Alkyl, Aryl, Ar-$C_1$-$C_6$-alkyl; R'' = $C_1$-$C_6$-Alkyl, Aryl, Ar-$C_1$-$C_6$-alkyl, Tri-$C_1$-$C_6$-alkylsilyl) verwendet wird.

8. Verfahren nach einem der Ansprüche 4 - 7, dadurch gekennzeichnet, daß zunächst Eisenoxid-hydroxid bzw. Eisenoxid in ein ferromagnetisches nadelförmiges Metallpigment überführt und anschließend zur Einstellung der Koerzitivfeldstärke bei Temperaturen zwischen 125°C und 350°C im Vakuum oder unter Schutzgas bzw. inerter Flüssigkeit thermisch nachbehandelt wird.

9. Verfahren nach einem der Ansprüche 4 - 7, dadurch gekennzeichnet, daß nach Abtrennung der Magnetpigmentpulver aus der organischen Phase der Träger durch Ansäuern in Form von freiem $BR_3$ bzw. $BR_n(OR')_{3-n}$ regeneriert und wiedergewonnen wird.

10. Verfahren nach einem der Ansprüche 4-7, dadurch gekennzeichnet, daß nach Abtrennung der Magnetpigmentpulver der Träger mit metallorganischen Alkylierungsmitteln behandelt und in Form von Triorganoboran wiedergewonnen wird.

11. $NR''_4[BR_n(OR')_{3-n}H]$ aus Ammoniumsalzen $NR''_4Y$ und $MH_x$ • $[BR_{-n}]_x$; wobei (R = $C_1$-$C_6$-Alkyl, Ar($C_1$-$C_6$)alkyl; R' = $C_1$-$C_6$Alkyl, Aryl(phenyl), Ar($C_1$-$C_6$)alkyl; R'' = $C_1$-$C_6$Alkyl, Aryl(phenyl); Ar($C_1$-$C_6$)alkyl, Tri($C_1$-$C_6$)alkylsilyl; Y ein Anion und M ein Metall der 1. bzw. 2. Gruppe des PSW ist.

12. $CaH_2$ • $(BR_3)_2$ (R = $C_1$-$C_6$-Alkyl) in situ aus Ca, $H_2$ und Trialkylboran.

**13.** Magnetisches Aufzeichnungsmedium, enthaltend mindestens ein Eisen-Metallpigment nach Anspruch 1, 2 oder 3 oder mindestens ein gemäß den Ansprüchen 4 bis 10 hergestelltes Eisen-Metallpigment.

**Patentansprüche für folgenden Vertragsstaat : ES**

**1.** Verfahren zur Herstellung von nadelförmigen Eisen-Metallpigmenten dadurch gekennzeichnet, daß man feinteiliges nadelförmiges Eisenoxid-hydroxid oder Eisenoxid - ggf. mit Zuschlägen ausgerüstet - in organischen Solventien weit unterhalb der Desoxygenierungstemperatur im Gasphasenprozeß $H_2$ + Fe-Oxide bei 20°C - 150°C, 1 bis 100 h, vorzugsweise 4 bis 16 h unter Rühren vorzugsweise unterhalb 100°C, mit $H_2$ von 1 - 200 bar, vorzugsweise von 50 - 100 bar und Metallhydriden $MH_x$ (x = 1,2) umsetzt, welche mit einem regenerierbaren Träger der allgemeinen Formel $BR_3$, $BR_n(OR')_{3-n}$, BROR'H oder $BR_nH_{3-n}$ (R, R' = $C_1$-$C_6$-Alkyl, Ar-$C_1$-$C_6$-alkyl; n = 0,1,2) in Form eines Trägerkomplexes $MH_x$ . $[BR_3]_x$, $MH_x$ . $[BR_n(OR')_{3-n}]_x$, $MH_x$ . $[BROR'H]_x$ $MH_x$ . $[BR_nH_{3-n}]_x$ oder $NR''_4[BR_n(OR')_{3-n}H]$ ($R''_4$ = $C_1$-$C_6$-Alkyl, Aryl(phenyl), Ar-$C_1$-$C_6$-alkyl, Tri-$C_1$-$C_6$-alkylsilyl; in organischer Phase solvatisiert sind, wobei die Pigmente sich von der klaren organischen Lösung durch Filtration unmittelbar abtrennen lassen.

**2.** Verfahren nach Anspruch 1, dadurch gekennzeichnet, daß das Metallhydrid $MH_x$ ein Metall M der 1. bzw. 2. Gruppe des PSE enthält.

**3.** Verfahren nach Anspruch 1, dadurch gekennzeichnet, daß der lösliche Metallhydrid-Trägerkomplex in-situ aus Metallen der 1. bzw. 2. Gruppe des PSE, $H_2$ und dem Träger bereitet wird.

**4.** Verfahren nach Anspruch 1, dadurch gekennzeichnet, daß als löslicher Hydrid-Trägerkomplex ein $NR''_4[BR_n(OR')_{3-n}H]$ oder $NR''_4[BR_3H]$ (R = $C_1$-$C_6$-Alkyl, Ar-$C_1$-$C_6$-alkyl; R' = $C_1$-$C_6$-Alkyl, Aryl, Ar-$C_1$-$C_6$-alkyl; R'' = $C_1$-$C_6$-Alkyl, Aryl, Ar-$C_1$-$C_6$-alkyl, Tri-($C_1$-$C_6$-alkylsilyl) verwendet wird.

**5.** Verfahren nach einem der Ansprüche 1 - 4, dadurch gekennzeichnet, daß zunächst Eisenoxid-hydroxid bzw. Eisenoxid in ein ferromagnetisches nadelförmiges Metallpigment überführt und anschließend zur Einstellung der Koerzitirfeldstärke bei Temperaturen zwischen 125°C und 350°C im Vakuum oder unter Schutzgas bzw. inerter Flüssigkeit thermisch nachbehandelt wird.

**6.** Verfahren nach einem der Ansprüche 1 - 4, dadurch gekennzeichnet, daß nach Abtrennung der Magnetpigmentpulver aus der organischen Phase der Träger durch Ansäuern in Form von freiem $BR_3$ bzw. $BR_n(OR')_{3-n}$ regeneriert und wiedergewonnen wird.

**7.** Verfahren nach einem der Ansprüche 1-4, dadurch gekennzeichnet, daß nach Abtrennung der Magnetpigmentpulver der Träger mit metallorganischen Alkylierungsmitteln behandelt und in Form von Triorganoboran wiedergewonnen wird.

**8.** Verfahren nach Anspruch 1 zur Herstellung von nadelförmigen Eisen-Metallpigmente für die magnetische Signalaufzeichnung, von hoher Speicherdichte, hoher Sättigungsmagnetisierung $M_S$ (> 160 mTcm$^3$/g) und Remanenz $M_R$ (> 80 mTcm$^3$/g), deren Koerzitivfeldstärke $H_C$ bei gegebener Kristallitgröße des Ausgangsmaterials durch thermische Nachbehandlung zwischen 35 kA/m und 125 kA/m einstellbar ist.

**9.** Verfahren nach Anspruch 1 zur Herstellung von nadelförmigen Eisen-Metallpigmente nach Anspruch 1, dadurch gekennzeichnet, daß die Sättigungsmagnetisierung im Bereich von 160 bis 225 mT.cm$^3$/g und die Remanenz $M_R$ 80 bis 115 mT.cm$^3$/g beträgt.

**10.** Verfahren nach Anspruch 1 zur Herstellung von nadelförmigen, unversinterten Eisen-Metallpigmente für die magnetische Signalaufzeichnung, von hoher Speicherdichte, hoher Sättigungsmagnetisierung $M_S$ (> 160 mTcm$^3$/g) und Remanenz $M_R$ (> 80 mTcm$^3$/g), deren Koerzitivfeldstärke bei einer Kristallitgröße des Ausgangsmaterials im Bereich von 16 nm $H_C$ 35 bis 90 kA/m beträgt.

**11.** Verfahren zur Herstellung von $NR''_4[BR_n(OR')_{3-n}H]$ durch Umsetzung von Ammoniumsalzen $NR''_4Y$ mit $MH_x$ • $[BR_{-n}]_x$; wobei
(R = $C_1$-$C_6$-Alkyl, Ar($C_1$-$C_6$)alkyl; R' = $C_1$-$C_6$ Alkyl, Aryl(phenyl), Ar($C_1$-$C_6$)alkyl; R'' = $C_1$-$C_6$ Alkyl, Aryl(phenyl); Ar($C_1$-$C_6$)alkyl, Tri($C_1$-$C_6$)alkylsilyl; Y ein Anion und M ein Metall der 1. bzw. 2. Gruppe des PSW ist.

**12.** Verfahren zur Herstellung von $CaH_2 \cdot (BR_3)_2$ ($R = C_1$-$C_6$-Alkyl) in situ durch Umsetzung von Ca, $H_2$ und Trialkylboran.

**13.** Magnetisches Aufzeichnungsmedium, enthaltend mindestens ein Eisen-Metallpigment nach Anspruch 1, 2 oder 3 oder mindestens ein gemäß den Ansprüchen 4 bis 10 hergestelltes Eisen-Metallpigment.

**Claims**

**Claims for the following Contracting States : AT, BE, CH, DE, DK, FR, GB, IT, LU, NL, SE**

**1.** Acicular iron metal pigments for magnetic signal recording, having a high storage density, high saturation magnetization $M_S$ (> 160 mT•cm$^3$/g) and remanence $M_R$ (> 80 mT•cm$^3$/g), the coercive field strength $H_C$ of which at a given crystallite size of the starting material is adjustable to between 35 kA/m and 125 kA/m by means of a thermal after-treatment.

**2.** Acicular iron metal pigments according to claim 1, characterized in that the saturation magnetization is within the range of from 160 to 225 mT•cm$^3$/g and the remanence $M_R$ is from 80 to 115 mT•cm$^3$/g.

**3.** Acicular non-sintered iron metal pigments for magnetic signal recording, having a high storage density, high saturation magnetization $M_S$ (> 160 mT•cm$^3$/g) and remanence $M_R$ (> 80 mT cm$^3$/g), the coercive field strength $H_C$ of which at a crystallite size of the starting material in the range of 16 nm is $H_C$ from 35 to 90 kA/m.

**4.** A process for preparing acicular iron metal pigments, characterized in that a finely divided acicular iron oxide-hydroxide or iron oxide - optionally provided with additives - is reacted with $H_2$ at from 1 to 200 bar, and preferably from 50 to 100 bar, and metal hydrides $MH_x$ (x = 1,2) under organic solvents at temperatures of far below the deoxygenation temperature in the gas phase process $H_2$ + Fe oxides, at from 20 °C to 150 °C for 1 to 100 hours, and preferably from 4 to 16 hours, which metal hydrides have been solvatized in organic phase with a regenerable carrier of the general formula $BR_3$, $BR_n(OR')$-$_{3-n}$, BROR'H or $BR_nH_{3-n}$ (R, R' = $C_1$-$C_6$ alkyl, Ar-$C_1$-$C_6$ alkyl; n = 0, 1, 2) in the form of a carrier complex $MH_x \cdot [BR_3]_x$, $MH_x \cdot [BR_n(OR')_{3-n}]_x$, $MH_x \cdot [BROR'H]_x$, $MH_x \cdot [BR_nH_{3-n}]_x$ or $NR''_4[BR_n(OR')$-$_{3-n}H]$ {$R''_4$ = $C_1$-$C_6$ alkyl, aryl (phenyl), Ar-$C_1$-$C_6$ alkyl, tri-$C_1$-$C_6$ alkylsilyl}, said pigments being immediately separable from the clear organic solution by filtration.

**5.** The process according to claim 4, characterized in that the metal hydride $MH_x$ contains a metal M of the first or second groups of the Periodic Table of Elements (PSE).

**6.** The process according to claim 4, characterized in that the soluble metal hydride-carrier complex is prepared *in situ* from metals of the first or second groups of the PSE, $H_2$ and the carrier.

**7.** The process according to claim 4, characterized in that a $NR''_4[BR_n(OR')_{3-n}H]$ or $NR''_4[BR_3H]$ {R = $C_1$-$C_6$ alkyl, Ar-$C_1$-$C_6$ alkyl; R' = $C_1$-$C_6$ alkyl, aryl, Ar-$C_1$-$C_6$ alkyl; R'' = $C_1$-$C_6$ alkyl, aryl, Ar-$C_1$-$C_6$ alkyl, tri-$C_1$-$C_6$ alkylsilyl} is used as the soluble hydride-carrier complex.

**8.** The process according to anyone of claims 4 to 7, characterized in that first iron oxide-hydroxide or iron oxide, respectively, is converted into a ferromagnetic acicular metal pigment which then, for adjusting the coercive field strength, is thermally after-treated *in vacuo* or under a protective gas or under an inert liquid, respectively, at temperatures between 125 °C and 350 °C.

**9.** The process according to anyone of claims 4 to 7, characterized in that, after the separation of the magnet pigment powders from the organic phase, by acidification the carrier is regenerated and recovered in the form of free $BR_3$ or $BR_n(OR')_{3-n}$.

**10.** The process according to anyone of claims 4 to 7, characterized in that, after the separation of the magnet pigment powders, the carrier is treated with organometal alkylating agents and is recovered in the form of a tris-organoborane.

**11.** $NR''_4[BR_n(OR')_{3-n}H]$ from ammonium salts $NR''_4 Y$ and $MH_x \bullet [BR_n]_x$, wherein $R = C_1$-$C_6$ alkyl, Ar-$C_1$-$C_6$ alkyl; $R' = C_1$-$C_6$ alkyl, aryl (phenyl), Ar-$C_1$-$C_6$ alkyl; $R'' = C_1$-$C_6$ alkyl, aryl (phenyl), Ar-$C_1$-$C_6$ alkyl, tri-$C_1$-$C_6$ alkylsilyl; Y is an anion, and M is a metal of the first or second groups of the PSE.

**12.** $CaH_2 \bullet (BR_3)_2$ {$R = C_1$-$C_6$ alkyl} *in situ* from Ca, $H_2$ and trialkyl borane.

**13.** A magnetic recording medium, containing at least one iron metal pigment according to claims 1, 2 or 3 or at least one iron metal pigment prepared according to claims 4 to 10.

**Claims for the following Contracting State : ES**

**1.** A process for preparing acicular iron metal pigments, characterized in that a finely divided acicular iron oxide-hydroxide or iron oxide - optionally provided with additives - is reacted with $H_2$ at from 1 to 200 bar, and preferably from 50 to 100 bar, and metal hydrides $MH_x$ ($x = 1,2$) under organic solvents at temperatures of far below the deoxygenation temperature in the gas phase process $H_2$ + Fe oxides, at from 20 °C to 150 °C for 1 to 100 hours, and preferably from 4 to 16 hours, which metal hydrides have been solvatized in organic phase with a regenerable carrier of the general formula $BR_3$, $BR_n(OR')_{3-n}$, BROR'H or $BR_nH_{3-n}$ (R, R' = $C_1$-$C_6$ alkyl, Ar-$C_1$ -$C_6$ alkyl; n = 0, 1, 2) in the form of a carrier complex $MH_x \bullet [BR_3]_x$, $MH_x \bullet [BR_n(OR')_{3-n}]_x$, $MH_x \bullet [BROR'H]_x$, $MH_x \bullet [BR_nH_{3-n}]_x$ or $NR''_4[BR_n(OR')_{3-n}H]$ {$R''_4 = C_1$-$C_6$ alkyl, aryl (phenyl), Ar-$C_1$-$C_6$ alkyl, tri-$C_1$-$C_6$ alkylsilyl}, said pigments being immediately separable from the clear organic solution by filtration.

**2.** The process according to claim 1, characterized in that the metal hydride $MH_x$ contains a metal M of the first or second groups of the Periodic Table of Elements (PSE).

**3.** The process according to claim 1, characterized in that the soluble metal hydride-carrier complex is prepared *in situ* from metals of the first or second groups of the PSE, $H_2$ and the carrier.

**4.** The process according to claim 1, characterized in that a $NR''_4[BR_n(OR')_{3-n}H]$ or $NR''_4[BR_3H]$ {$R = C_1$-$C_6$ alkyl, Ar-$C_1$-$C_6$ alkyl; R' = $C_1$-$C_6$ alkyl, aryl, Ar-$C_1$-$C_6$ alkyl; R'' = $C_1$-$C_6$ alkyl, aryl, Ar-$C_1$-$C_6$ alkyl, tri-$C_1$-$C_6$ alkylsilyl} is used as the soluble hydride-carrier complex.

**5.** The process according to anyone of claims 1 to 4, characterized in that first iron oxide-hydroxide or iron oxide, respectively, is converted into a ferromagnetic acicular metal pigment which then, for adjusting the coercive field strength, is thermally after-treated *in vacuo* or under a protective gas or under an inert liquid, respectively, at temperatures between 125 °C and 350 °C.

**6.** The process according to anyone of claims 1 to 4, characterized in that, after the separation of the magnet pigment powders from the organic phase, by acidification the carrier is regenerated and recovered in the form of free $BR_3$ or $BR_n(OR')_{3-n}$.

**7.** The process according to anyone of claims 1 to 4, characterized in that, after the separation of the magnet pigment powders, the carrier is treated with organometal alkylating agents and is recovered in the form of a tris-organoborane.

**8.** The process according to claim 1 for preparing acicular iron metal pigments for magnetic signal recording, having a high storage density, high saturation magnetization $M_S$ (> 160 mT$\bullet$cm$^3$/g) and remanence $M_R$ (> 80 mT$\bullet$cm$^3$/g), the coercive field strength $H_C$ of which at a given crystallite size of the starting material is adjustable to between 35 kA/m and 125 kA/m by means of a thermal after-treatment.

**9.** The process according to claim 1 for preparing acicular iron metal pigments, characterized in that the saturation magnetization is within the range of from 160 to 225 mT$\bullet$cm$^3$/g and the remanence $M_R$ is from 80 to 115 mT$\bullet$cm$^3$/g.

**10.** The process according to claim 1 for preparing acicular non-sintered iron metal pigments for magnetic signal recording, having a high storage density, high saturation magnetization $M_S$ (> 160 mT$\bullet$cm$^3$/g) and remanence $M_R$ (> 80 mT cm$^3$/g), the coercive field strength $H_C$ of which at a crystallite size of the starting material in the range of 16 nm is $H_C$ from 35 to 90 kA/m.

**11.** A process for preparing $NR''_4[BR_n(OR')_{3-n}H]$ by the reaction of ammonium salts $NR''_4Y$ with $MH_x$ • - $[BR_n]_x$, wherein $R$ = $C_1$-$C_6$ alkyl, $Ar$-$C_1$-$C_6$ alkyl; $R'$ = $C_1$-$C_6$ alkyl, aryl (phenyl), $Ar$-$C_1$-$C_6$ alkyl; $R''$ = $C_1$-$C_6$ alkyl, aryl (phenyl), $Ar$-$C_1$-$C_6$ alkyl, tri-$C_1$-$C_6$ alkylsilyl; $Y$ is an anion, and $M$ is a metal of the first or second groups of the PSE.

**12.** A process for preparing $CaH_2$ • $(BR_3)_2$ {$R$ = $C_1$-$C_6$ alkyl} *in situ* by the reaction of Ca, $H_2$ and trialkyl borane.

**13.** A magnetic recording medium, containing at least one iron metal pigment according to claims 1, 2 or 3 or at least one iron metal pigment prepared according to claims 4 to 10.

**Revendications**

**Revendications pour les Etats contractants suivants : AT, BE, CH, DE, DK, FR, GB, IT, LU, NL, SE**

**1.** Pigments métalliques aciculaires à base de fer pour l'enregistrement magnétique de signaux à haute densité de mémoire, à haute saturation magnétique $M_s$(> à 160 $mT.cm^3/g$) et à haute rémanence $M_R$ - (> à 80 $mT.cm^3/g$), dont l'intensité du champ coercitif $H_c$ est réglable, pour une grosseur de cristallite donnée de la matière de départ, par un post-traitement thermique, entre 35 kA/m et 125 kA/m.

**2.** Pigments métalliques aciculaires à base de fer selon la revendication 1, caractérisés en ce que la saturation magnétique se situe entre 160 et 225 $mT.cm^3/g$ et la rémanence $M_R$ se situe entre 80 et 115 $mT.cm^3/g$.

**3.** Pigments métalliques aciculaires à base de fer, non frittés pour l'enregistrement magnétique de signaux, à haute densité de mémoire, à grande saturation magnétique $M_s$ (> à 160 $mT.cm^3/g$) et à grande rémanence $M_R$ (> à 80 $mT.cm^3/g$), dont l'intensité du champ coercitif se situe, pour une grosseur de cristaux de la matière de départ de l'ordre de 16 nm, à une intensité $H_c$ de 35 à 90 kA/m.

**4.** Procédé de préparation de pigments métalliques aciculaires à base de fer, procédé caractérisé en ce qu'on fait réagir de l'hydroxyde-oxyde de fer ou de l'oxyde de fer aciculaire en fines particules - éventuellement additionné de produits ajoutés - dans des solvants organiques à une température nettement inférieure à la température de désoxygénation dans un procédé en phase gazeuse $H_2$ + oxydes de fer à 20°C-150°C, durant 1 à 100 heures, avantageusement 4 à 16 heures sous agitation, avantageusement au-dessous de 100°C, avec $H_2$ sous une pression de 1 à 200 bars, avantageusement de 50 à 100 bars et avec des hydrures de métaux $MH_x$ (x = 1,2), lesquels sont solvatés en phase organique avec un support ou véhicule régénérable, de formule générale $BR_3$, $BR_n(OR')_{3-n}$, $BROR'H$ ou $BR_nH_{3-n}$ (R,R' = alkyle en $C_1$ à $C_6$, Ar-alkyle en $C_1$ à $C_6$; n = 0, 1, 2) sous forme d'un complexe de support $MH_x$ . $[BR_3]_x$, $MH_x.[BR_n(OR')_{3-n}]_{x'}$, $MH_x$. $[BROR'H]_x$ $MH_x$. $[BR_nH_{3-n}]_x$ ou $NR''_4$-$[BR_n(OR')_{3-n}H]$ ($R''_4$ = alkyle en $C_1$ à $C_6$, aryle (phényle), Ar-alkyle en $C_1$ à $C_6$, tri(alkyl silyle en $C_1$ à $C_6$), les pigments se laissant séparer immédiatement par filtration de la solution organique limpide.

**5.** Procédé selon la revendication 4, caractérisé en ce que l'hydrure de métal $MH_x$ contient un métal M du premier ou du second groupe du Système ou Tableau Périodique des Eléments.

**6.** Procédé selon la revendication 4, caractérisé en ce que le complexe soluble hydrure de métal-support est préparé "in situ" à partir de métaux du groupe 1 ou du groupe 2 du Tableau Périodique des Eléments, de $H_2$ et du support.

**7.** Procédé selon la revendication 4, caractérisé en ce qu'on utilise comme complexe soluble d'hydrure et de support un $NR''_4$ $[BR_n(OR')_{3-n}H]$ ou $NR''_4$ $[BR_3H]$ (R = alkyle en $C_1$ à $C_6$, Ar-alkyle en $C_1$ à $C_6$, R' = alkyle en $C_1$ à $C_6$, aryle, Ar-alkyle en $C_1$ à $C_6$; R'' = alkyle en $C_1$ à $C_6$, aryle, Ar-alkyle en $C_1$ à $C_6$, tris(alkyl silyle en $C_1$ à $C_6$).

**8.** Procédé selon l'une des revendications 4 à 7,; caractérisé en ce qu'on transforme tout d'abord l'oxyde-hydroxyde de fer ou l'oxyde de fer en un pigment métallique aciculaire ferromagnétique, puis on traite ensuite par voie thermique, pour ajuster l'intensité de champ coercitif, à des températures comprises entre 125°C et 350°C sous vide ou sous gaz protecteur ou dans un liquide inerte.

9. Procédé selon l'une des revendications 4 à 7, caractérisé en ce qu'après la séparation de la poudre de pigment magnétique à partir de la phase organique, on régénère le support par acidification sous forme de $BR_3$ ou $BR_n(OR')_{3-n}$ libre et on le récupère à nouveau.

10. Procédé selon l'une des revendications 4 à 7, caractérisé en ce qu'après la séparation de la poudre de pigments magnétiques, on traite le véhicule ou support par des agents organométalliques d'alkylation et on le récupère à nouveau sous forme de triorgano-borane.

11. $NR''_4[BR_n(OR')_{3-n}H]$ obtenu par la réaction de sels d'ammonium $NR''_4Y$ avec $MH_x$. $[BR_n]_x$; où R représente un groupe alkyle en $C_1$ à $C_6$, Ar-alkyle en $C_1$ à $C_6$; R' représente un groupe alkyle en $C_1$ à $C_6$, aryle (phényle), Ar-alkyle($C_1$ à $C_6$); R'' représente un groupe alkyle en $C_1$ à $C_6$, aryle (phényle); Ar-alkyle ($C_1$ à $C_6$), tris-alkylsilyle ($C_1$ à $C_6$); Y est un anion et M représente un métal du premier ou du second groupe du Tableau Périodique des Eléments.

12. $CaH_2$. $(BR_3)_2$ [R = alkyle en $C_1$ à $C_6$] obtenu sur place ("in situ") par la réaction de Ca, $H_2$ et de trialkylborane.

13. Milieu magnétique d'enregistrement, contenant au moins un pigment métallique à base de fer selon la revendication 1, 2 ou 3 ou au moins un pigment métallique à base de fer préparé selon les revendications 4 à 10.

**Revendications pour l'Etat contractant suivant : ES**

1. Procédé de préparation de pigments métalliques aciculaires à base de fer, procédé caractérisé en ce qu'on fait réagir de l'hydroxyde-oxyde de fer ou de l'oxyde de fer aciculaire en fines particules - éventuellement additionné de produits ajoutés - dans des solvants organiques à une température nettement inférieure à la température de désoxygénation dans un procédé en phase gazeuse $H_2$ + oxydes de fer à 20°C-150°C, durant 1 à 100 heures, avantageusement 4 à 16 heures sous agitation, avantageusement au-dessous de 100°C, avec $H_2$ sous une pression de 1 à 200 bars, avantageusement de 50 à 100 bars et avec des hydrures de métaux $MH_x$ (x = 1,2), lesquels sont solvates en phase organique avec un support ou véhicule régénérable, de formule générale $BR_3$, $BR_n(OR')_{3-n'}$, BROR'H ou $BR_nH_{3-n}$ (R,R' = alkyle en $C_1$ à $C_6$, Ar-alkyle en $C_1$ à $C_6$; n = 0, 1, 2) sous forme d'un complexe de support $MH_x$ . $[BR_3]_x$, $MH_x.[BR_n(OR')_{3-n}]_{x'}$, $MH_x$. $[BROR'H]_x$ $MH_x$. $[BR_nH_{3-n}]_x$ ou $NR''_4$-$[BR_n(OR')_{3-n}H]$ (R''_4 = alkyle en $C_1$ à $C_6$, aryle (phényle), Ar-alkyle en $C_1$ à $C_6$, tri(alkyle silyle en $C_1$ à $C_6$), les pigments se laissant séparer immédiatement par filtration de la solution organique limpide.

2. Procédé selon la revendication 1, caractérisé en ce que l'hydrure de métal $MH_x$ contient un métal M du premier ou du second groupe du Système ou Tableau Périodique des Eléments.

3. Procédé selon la revendication 1, caractérisé en ce que le complexe soluble hydrure de métal-support est préparé "in situ" à partir de métaux du groupe 1 ou du groupe 2 du Tableau Périodique des Eléments, de $H_2$ et du support.

4. Procédé selon la revendication 1, caractérisé en ce qu'on utilise comme complexe soluble d'hydrure et de support un $NR''_4$ $[BR_n(OR')_{3-n}H]$ ou $NR''_4$ $[BR_3H]$ (R = alkyle en $C_1$ à $C_6$, Ar-alkyle en $C_1$ à $C_6$, R' = alkyle en $C_1$ à $C_6$, aryle, Ar-alkyle en $C_1$ à $C_6$; R'' = alkyle en $C_1$ à $C_6$, aryle, Ar-alkyle en $C_1$ à $C_6$, tris(alkyl silyle en $C_1$ à $C_6$).

5. Procédé selon l'une des revendications 1 à 4, caractérisé en ce qu'on transforme tout d'abord l'oxyde-hydroxyde de fer ou l'oxyde de fer en un pigment aciculaire de métal ferromagnétique, puis, pour ajuster l'intensité du champ coercitif, on soumet à un traitement thermique subséquent à des températures comprises entre 125°C et 350°C sous vide ou sous gaz protecteur ou en liquide inerte.

6. Procédé selon l'une des revendications 1 à 4, caractérisé en ce qu'après la séparation de la poudre de pigment magnétique à partir de la phase organique, on régénère le support par acidification sous forme de $BR_3$ ou $BR_n(OR')_{3-n}$ libre et on le récupère à nouveau.

EP 0 379 062 B1

**7.** Procédé selon l'une des revendications 1 à 4, caractérisé en ce qu'après la séparation de la poudre de pigments magnétiques, on traite le véhicule ou support par des agents organométalliques d'alkylation et on le récupère à nouveau sous forme de triorgano-borane.

**8.** Procédé selon la revendication 1 pour préparer des pigments métalliques aciculaires à base de fer pour l'enregistrement magnétique de signaux, ayant une grande densité de mémoire, une forte saturation magnétique $M_s$ (> 160 mT.cm$^3$/g) et une grande rémanence $M_R$ (> à 80 mT.cm$^3$/g), dont l'intensité du champ coercitif $H_c$ est, pour une grandeur de cristallite donnée de la matière de départ, réglable par un post-traitement thermique entre 35 kA/m et 125 kA/m.

**9.** Procédé selon la revendication 1, pour préparer des pigments métalliques aciculaires à base de fer, selon la revendication 1, procédé caractérisé en ce que la saturation magnétique se situe entre 160 et 225 mT.cm$^3$/g et la rémanence $M_R$ se situe entre 80 et 115 mT.cm$^3$/g.

**10.** Procédé selon la revendication 1 pour préparer des pigments métalliques aciculaires de fer, non frittés, pour l'enregistrmeent magnétique de signaux, ces pigments ayant une grande densité de mémoire, une forte saturation magnétique $M_s$ (> à 160 mT.cm$^3$/g) et une grande rémanence $M_R$ (> à 80 mT.cm$^3$/g), dont l'intensité du champ coercitif se situe, pour une grosseur des cristaux de matière de départ de l'ordre de 16 nm, à $H_C$ 35 à 90kA/m.

**11.** Procédé pour préparer $NR''_4(BR_n(OR')_{3-n}H]$, par réaction de sels d'ammonium $NR''_4Y$ avec $MH_x$. $[BR_n]_x$, où R représente un groupe alkyle en $C_1$ à $C_6$, Ar-alkyle en $C_1$ à $C_6$, R' représente un groupe alkyle en $C_1$ à $C_6$, aryle (phényle), Ar-alkyle en $C_1$ à $C_6$; R'' représente un groupe alkyle en $C_1$ à $C_6$, aryle (phényle); Ar-alkyle en $C_1$ à $C_6$; tris(alkyle silyle en $C_1$ à $C_6$); Y représente un anion et M un métal du premier ou du second groupe du Tableau Périodique des Eléments.

**12.** Procédé de préparation de $CaH_2 . (BR_3)_2$, (R représentant un groupe alkyle en $C_1$ à $C_6$), sur place ("in situ") par réaction de Ca, $H_2$ et d'un trialkylborane.

**13.** Milieu magnétique d'enregistrement, contenant au moins un pigment métallique à base de fer selon la revendication 1, 2 ou 3 ou au moins un pigment métallique à base de fer préparé selon l'une quelconque des revendications 4 à 10.

Fig. 1

0,25 µm